Europäisches Patentamt

(19) European Patent Office

Office européen des brevets

(11) Publication number: **0 272 316 B1**

# (12) EUROPEAN PATENT SPECIFICATION

(45) Date of publication of patent specification: **16.12.92**   (51) Int. Cl.⁵: **G01P 1/00**, G01D 11/30

(21) Application number: **87904616.7**

(22) Date of filing: **25.06.87**

(86) International application number:
**PCT/US87/01572**

(87) International publication number:
**WO 88/00348 (14.01.88 88/02)**

(54) MOUNTING SYSTEM FOR PRECISION TRANSDUCER.

(30) Priority: **27.06.86 US 879676**

(43) Date of publication of application:
**29.06.88 Bulletin 88/26**

(45) Publication of the grant of the patent:
**16.12.92 Bulletin 92/51**

(84) Designated Contracting States:
**CH DE FR GB LI**

(56) References cited:
**WO-A-86/03300**
**US-A- 3 601 343**
**US-A- 4 190 782**
**US-A- 4 266 157**
**US-A- 4 467 651**

(73) Proprietor: **SUNDSTRAND DATA CONTROL, INC.**
**15001 N.E. 36th Street P.O. Box 97001**
**Redmond, WA 98073-9701(US)**

(72) Inventor: **NORLING, Brian, L.**
**1532 - 145th Place S.E.**
**Mill Creek, WA 98012(US)**
Inventor: **TONN, Jeffrey, F.**
**1201 S. Garfield**
**Tacoma, WA 98444(US)**

(74) Representative: **SERJEANTS**
**25, The Crescent King Street**
**Leicester, LE1 6RX(GB)**

EP 0 272 316 B1

## Description

### Technical Field

The present invention relates to mounting systems for precision transducers and, in particular, to a stress-free mounting system for a transducer such as an accelerometer.

### Background of the Invention

It is often necessary to isolate a precision transducer from external stress. Such stress may be caused by mechanical distortion of the case or other structure to which the transducer is mounted, or by differential thermal expansion or contraction between the transducer and the case. Isolation from external stress can in principle be achieved by using a compliant mounting system. However, a compliant mounting system will not in general provide precise and stable alignment of the transducer with respect to its case. For many transducers, such alignment is critical for achieving proper operation. A compliant mounting system may also result in unwanted mechanical oscillation of the transducer when the case is exposed to vibration.

One type of precision transducer that is especially susceptible to external stress is an accelerometer. This is due, in part, to the extreme level of accuracy being sought. An accelerometer is an example of an instrument that must not be allowed to change position or vibrate with respect to its case. One prior accelerometer mounting technique has been to connect the accelerometer to the case by means of a metal ring or by means of a structural adhesive such as an epoxy resin. These prior non-compliant mounting techniques result in stress being transmitted to the accelerometer due to differential thermal expansion between the acclerometer and the mounting ring and case. These prior techniques also transmit stress to the accelerometer when the case is subjected to mechanical distortion. Distortion can be induced by mounting the case to a surrounding support, or by differential thermal expansion between the case and the support. Dimensional instabilities in epoxy joining materials can occur, especially at elevated temperatures. All such stresses may affect the output of a precision accelerometer and may result in reduced stability. The temperature induced stresses also may lead to increased variation of accelerometer output with temperature, and may create thermally induced errors in the accelerometer output. Thus, an improved mounting system for a precision transducer would be an advance in the art that would be greatly welcomed.

Our own British Patent Application, GB-A-2181550 published as WO-A-86/03300, describes and claims a mounting system for a precision transducer which is designed to avoid temperature-induced stresses and avoid thermally induced errors in the instruments output. The mounting system comprises a mounting ring mounting a cylindrical mounting section of the transducer in spaced alignment relative to a supporting case. The mounting ring comprises a circular array of mutually spaced mounting elements each connected at the top to the supporting case and brazed or welded at the bottom to the transducer mounting. The elements are joined together into a continuous band by a plurality of bridge sections at the bottom of the mounting elements, and the materials of the bridge sections and mounting elements are chosen for compatibility with the material of the transducer to reduce thermal stress.

The present invention is based on the realization that the mounting system of WO-A-86/03300 is capable of significant improvement.

### Summary of the Invention

The improvement is achieved with a mounting system as claimed in independent claim 1.

At least the first end mounting portions and the bridge sections are composed of a substance that has a coefficient of thermal expansion approximately equal to the coefficient of thermal expansion of the transducer. The intermediate portion of each mounting means is adapted to provide a low resistance to relative movement between the transducer and the case in a radial direction, and a high resistance to relative movement between the transducer and the case in directions normal to the radial direction. Differential thermal expansion between the transducer and the case therefore does not apply stress to the transducer, or cause misalignment between the transducer and the case.

### Brief Description of the Drawings

FIG. 1 is a perspective view of an accelerometer mounted in a case by the mounting system described and claimed in Patent Application No. WO-A-86/03300;

FIG. 2 is a perspective view of the mounting ring of a mounting system of the invention;

FIG. 3 is a cross-sectional view showing the connection of a mounting element between the transducer and case of the mounting system of Figure 2;

FIG. 4 is a side-elevational view of a portion of the mounting ring of the mounting system of Figure 2; and

FIG. 5 is a fragmentary view of the mounting ring of Figure 4.

## Detailed Description of the Invention

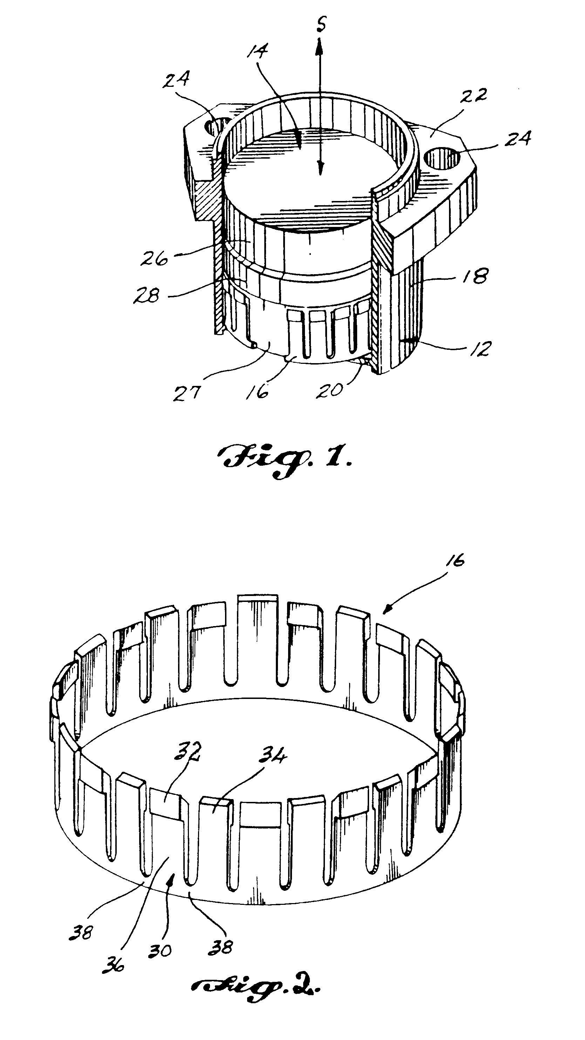

FIG. 1 shows an accelerometer mounted by means of the mounting system of WO-A-86/03300. The accelerometer of FIG. 1 includes a case 12, a transducer 14 and a mounting ring 16. The case 12 includes a cylindrical sidewall 18, a bottom wall 20 and a flange 22. The flange 22 includes mounting holes 24 that are used to mount the case and accelerometer to a supporting structure.

The transducer 14 has a generally cylindrical shape and comprises two excitation rings 26 and 27 joined by bellyband 28. Here the transducer 14 is considered to be an accelerometer which is adapted to respond to accelerations along an axial disposed sensitive axis 'S' by producing an electrical signal that indicates the direction and magnitude of such acceleration. The transducer 14 is mounted to the case 12 at excitation ring 27 by the mounting ring 16. The mounting ring 16 provides precise and stable alignment of the transducer 14, such that the transducer is not free to undergo translational or rotational movement with respect to the case. However, the mounting ring 16 does permit differential radial or volumetric thermal expansion or contraction between the transducer 14 and the case 12, and also serves to isolate the transducer from stresses that would otherwise result from distortion of the case. Distortion of the case 12 may be caused by mounting the flange 22 on a surface that is not perfectly flat, or by differential thermal expansion between the flange and its support.

The mounting ring 16 comprises a cylindrical array of resilient bridge sections, or flexure beams, each being compliant in the radial direction but resistant to deformation in other directions. The beams are spaced apart except at their lower ends; and at their upper ends are formed with radially out-turned pads or flanges for mounting to the case 12 for example by means of adhesive.

At its lower periphery the mounting ring 16 is formed as a continuous, cylindrical inner surface. The radius of such inner surface is dimensioned to match the radius of the adjacent outer surface of the transducer 14. The mounting ring 16 is joined or bonded to the transducer 14 by welding or brazing, which produces a rigid and integral bond between the mounting ring and the transducer 14. The plane of attachment of the transducer 14 to the mounting ring 16 is disclosed in WO-A-86/03300 as being preferably spaced as far as possible from the flange 22 of the case 12, in order to minimize the transmission of stress from the case flange to the transducer.

The object of the invention of WO-A-86/03300 is that the mounting ring 16 is attached to the transducer 14 in such a way that minimal stress is produced when the transducer and mounting ring undergo thermal expansion or contraction. This result is achieved by fabricating at least the lower continuous ring and the bridge sections from a material that has a coefficient of thermal expansion approximately equal to the coefficient of thermal expansion of the transducer 14, and in the particular embodiment shown in the drawings, of the excitation ring 27. Any filler metal or brazing material used to join the mounting ring to the transducer should be either very thin or have a coefficient of thermal expansion matched to the coefficient of thermal expansion of the transducer and mounting ring. In a preferred embodiment shown in WO86-03300, the mounting ring 16 is entirely fabricated from a metal identical to the metal forming excitation ring 27, and is welded to the excitation ring part of the transducer 14 without the use of a filler metal. Because of its low coefficient of thermal expansion, a 36% nickel-iron alloy sold under the Trade Mark INVAR is a particularly suitable metal with which to form the excitation ring 27 and the mounting ring 16.

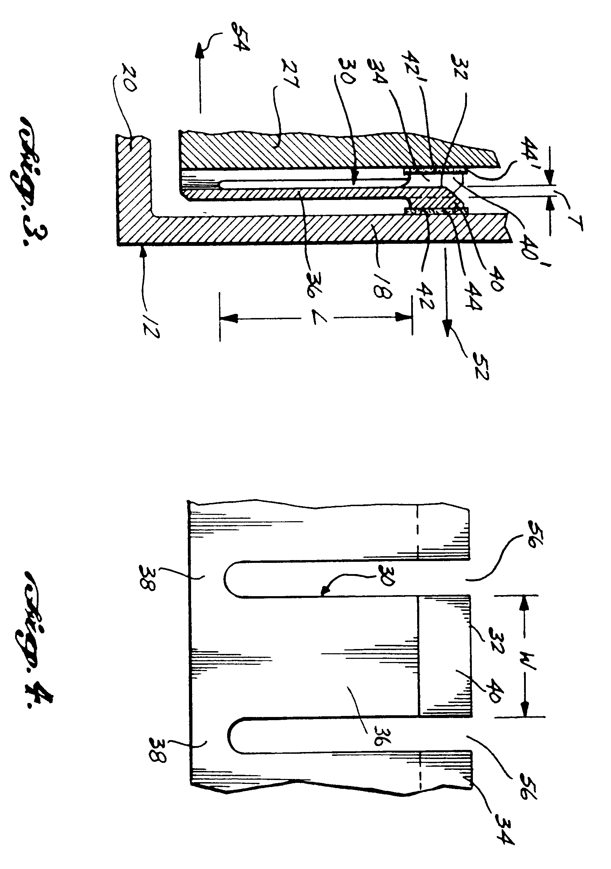

FIGS. 2 to 4 illustrate a mounting system according to the invention. Here, the mounting ring 16 comprises a plurality of mounting elements 30 (see FIG. 5). Each mounting element 30 comprises a pair of flexure beams 36, of which the right hand one has an end mounting portion 32 terminating in an out-turned pad or flange 40 attached to the case 12 as in WO-A-86/03300 and the left-hand one has an end mounting portion 34 terminating in an in-turned pad or flange 40' attached to the transducer mounting section 27, and a bridge section 38 connecting together the flexure beams 36 at the ends remote from the pads 40,40'. Further bridge sections 38 around the base of the mounting ring 16 join the mounting elements into a single, generally cylindrical mounting ring 16.

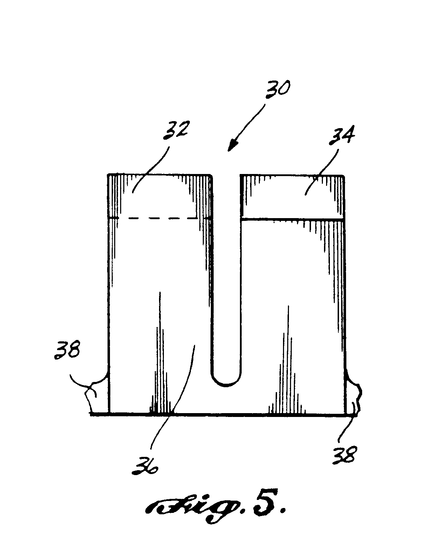

FIGS. 3 and 4 illustrate further details of the mounting elements 30 and of the means by which the mounting elements are connected to the transducer and case. The right end 34 and the left end 32 of each mounting element 30 lie generally in the same plane (i.e. a horizontal plane perpendicular to the cylindrical axis of the transducer 14). As best illustrated in FIG. 3, the left end 32 has formed thereon the pad 40' that includes an outwardly facing surface 42'. The right end 34 has formed thereon the pad 40 that includes an inwardly facing surface 42 . Both surfaces 42 and 42' preferably have a cylindrical contour that matches the contour of the adjacent inner wall of the side wall 18 of the case 12. Each pad may be joined to the adjacent side wall (i.e. 40 joined to 18; 40' joined to 27) by an adhesive layer 44 or 44' or by other means. It should be observed that each end of each mounting element 30 is attached to either the case 12 or the transducer 14, but not both. This feature, combined with the preferred compliant characteristics of the beams 36, reduces the amount of the external stress applied to the transducer.

Each intermediate portion or beam 36 is dimensioned such that it has a compliant axis oriented in the radial direction (indicated by arrows 52 and 54 of FIG. 3). The compliant axis of each beam 36 preferably intersects the axial centreline of the transducer. Each beam 36 is preferably dimensioned such that it is essentially rigid in directions normal to arrows 52 and 54 (i.e., along the length L of the mounting element 30 and in the directions into and out of the plane of the drawing in FIG. 3). Differential radial or volumetric thermal expansion (or contraction) between the transducer 14, the mounting ring 16 and the case 12 therefore results in differential movement between the transducer and case along the compliant axes of each beam. The beams, therefore, flex to take up the differential movement without transmitting significant stress to the transducer 14. However, the rigidity of the beams 36, in a direction perpendicular to their compliant axes, results in a mounting system in which the transducer is not free to rotate or to undergo overall translational movement with respect to the case 12. Therefore, in the case of an accelerometer transducer, the sensing axis of the accelerometer is preferably aligned with or in the stiffest or most rigid axis of the beams (i.e., beams in direct compression). This minimizes frequency response errors and phase shift error due to suspension system mechanical transmissibility.

The required compliant characteristics of each beam 36 are preferably achieved by making the width W (see FIG. 4) and length (see FIG.3) of each beam 36 substantially greater than the thickness T (see FIG. 3) of that beam. The width W of each beam 36 must, of course, be limited (with respect to the circumference of the mounting ring 16) such that each beam is essentially planar and compliant in a radial direction. In general, width-to-thickness ratios between about 10:1 and 20:1 are most suitable, although other ratios may be used, depending on the nature of the transducer and the mounting ring materials. One preferred mounting ring 16 comprises twenty-four equally spaced mounting elements, each having a length-to-thickness ratio of about 21:1 and a width-to-thickness ratio of about 12:1. The distance between adjacent mounting elements (i.e., the width of gaps 56) should be large enough to avoid interference between the beams due to thermal expansion or seismic inputs. Referring to FIG. 3, the distances that the pads 40 and 40' extend from the plane of mounting elements 30 should similarly be large enough to avoid interference between the mounting elements, the transducer 14 and the case 12.

If desired, electrical isolation of the mounted transducer can be achieved by using a mounting element made from a glass mat bound epoxy preform. Isolation of the transducer eliminates ground loops and, in some cases, allows the case to be a driven part of the detector circuit.

## Claims

1.   A mounting system for a generally cylindrical precision transducer (14), comprising a mounting ring (16) comprising a circular array of mounting elements (30) joined together into a closed band by a plurality of bridge sections (38) and supporting a cylindrical mounting section (27) of the transducer in spaced alignment relative to a supporting case (12), each mounting element (30) comprising:

a first end mounting portion (32) secured to the supporting case (12);

a second end mounting portion (34) secured to the transducer mounting section (27); and

resilient planar intermediate connecting means (36) axially aligned with one another and connecting together the first and second end mounting sections (32, 34), the resilient planar intermediate connecting means (36) having a low resistance to relative movement between the end mounting portions (32, 34) in a radial direction and a high resistance to such relative movement in the axial and circumferential directions;

at least the second end mounting portions (34) and the bridge sections (38) being composed of a substance having a coefficient of thermal expansion approximately equal to that of the transducer,

CHARACTERISED IN THAT

the first and second end mounting portions (32, 34) are positioned adjacent one another but separated by gaps in the same mounting plane which is generally perpendicular to the axis of the transducer mounting section, and the intermediate connecting means (36) extend to one side of the mounting plane.

2.   A mounting system according to claim 1, wherein the resilient planar interconnecting means (36) comprise a pair of resilient planar interconnecting portions (36) which are connected to one another and to the interconnecting portions (36) of adjacent mounting elements (30) by the bridge sections (38).

3.   A mounting system according to either preceding claim, wherein each of the first end portions (32) terminates in an outwardly projecting mounting pad (40) connected to the supporting case (12) and each of the second end portions (34) terminates in an inwardly projecting mounting pad (40) connected to the mounting section (27) of the transducer (14).

4.  A mounting system according to any preceding claim, wherein the entire mounting ring (16) is formed of a substance having a coefficient of thermal expansion approximately equal to that of the transducer.

5.  A mounting system according to any preceding claim, wherein the bridge sections (38) separate adjacent mounting elements (30) by angular spacings equal to the gaps between the first and second ends (32,34) of individual mounting elements (30).

6.  A mounting system according to any preceding claim, wherein the transducer is an accelerometer with a force sensing axis; and the plane of each intermediate portion is generally parallel to that force sensing axis.

**Patentansprüche**

1.  Befestigungssystem für einen im allgemein zylindrischen Präzisionswandler (14), mit einem Befestigungsring (16), der eine ringförmige Anordnung von Befestigungselementen (30) aufweist, die miteinander zu einem geschlossenen Band durch eine Vielzahl von Brückenabschnitten (38) verbunden sind und einen zylindrischen Befestigungsabschnitt (27) des Wandlers in einer Ausrichtung mit Abstand zu einem tragenden Gehäuse (12) halten, wobei jedes Befestigungselement (30) versehen ist mit:

einem ersten Befestigungsendabschnitt (32), der an dem tragenden Gehäuse (12) befestigt ist;

einem zweiten Befestigungsabschnitt (34), der an dem Befestigungsabschnitt (27) des Wandlers befestigt ist; und

federnden, ebenen Verbindungszwischenstücken (36), die axial zueinander ausgerichtet sind und die ersten und zweiten Befestigungsabschnitte (32, 34) miteinander verbinden, wobei die federnden Ebenen Verbindungszwischenstücke (36) bezüglich der relativen Bewegung zwischen den Befestigungsendabschnitten (32, 34) einen niedrigen Widerstand in einer radialen Richtung und einen hohen Widerstand gegenüber einer solchen Bewegung in axialen und Umfangsrichtungen aufweist,

wobei wenigstens die zweiten Befestigungsendabschnitte (34) und die Brückenabschnitte (38) aus einem Material gebildet sind, das eine etwa gleiche thermische Ausdehnung aufweist, wie das des Wandlers,

**dadurch gekennzeichnet, daß**

die ersten und zweiten Befestigungsendabschnitte (32, 34) benachbart zueinander, aber durch Zwischenräume getrennt in derselben Befestigungsebene angeordnet sind, die im wesentlichen senkrecht zu der Achse des Wandler-Befestigungsabschnitts liegt und daß sich die Verbindungszwischenstücke (36) auf eine Seite der Befestigungsebene erstrecken.

2.  Befestigungssystem nach Anspruch 1, in dem die federnden ebenen Verbindungszwischenstücke (36) ein Paar federnder ebener Verbindungsabschnitte (36) aufweist, die miteinander und mit den Verbindungsabschnitten von benachbarten Befestigungselementen (30) über die Brückenabschnitte (38) verbunden sind.

3.  Befestigungssystem nach einem der vorstehenden Ansprüche, in dem jeder der ersten Endabschnitte (32) in einem auswärts vorstehenden Befestigungsstück (40) endet, das mit dem tragenden Gehäuse (12) verbunden ist und daß jedes der zweiten Endabschnitte (34) in einem einwärts vorstehenden Befestigungsstück (40) endet, das mit dem Befestigungsabschnitt (27) des Wandlers (14) verbunden ist.

4.  Befestigungssystem nach einem der vorstehenden Ansprüche, in dem der gesamte Befestigungsring (16) aus einem Material gebildet ist, das einen thermischen Expansionskoeffizienten aufweist, der im wesentlichen gleich dem des Wandlers ist.

5.  Befestigungssystem nach einem der vorstehenden Ansprüche, in dem die Brückenabschnitte (38) benachbarte Befestigungselemente (30) mit Zwischenräumen voneinander trennen, die den Zwischenräumen zwischen den ersten und zweiten Enden (32, 34) eines einzelnen Befestigungselements (30) gleichen.

6.  Befestigungssystem nach einem der vorstehenden Ansprüche, in dem der Wandler ein Beschleunigungsaufnehmer mit einer kraftaufnehmenden Achse ist und die Ebene jedes Zwischenabschnitts im wesentlichen parallel zu der kraftaufnehmenden Achse liegt.

## Revendications

1. Système de fixation pour un transducteur de précision (14) généralement cylindrique, comprenant une bague de fixation (16) comportant une série circulaire d'éléments de fixation (30) reliés les uns aux autres sous forme d'une bande fermée par une pluralité de sections de pont (38) et supportant une section de fixation cylindrique (27) du transducteur en alignement avec et espacée par rapport à un boîtier de support (12), chaque élément de fixation (30) comprenant:

   une première portion de fixation d'extrémité (32) fixée au boîtier de support (12);

   une second portion de fixation d'extrémité (34) fixée à la section de fixation (27) du transducteur; et

   des moyens de connexion intermédiaires plans et élastiques (36) alignés axialement les uns par rapport aux autres et reliant ensemble les première et seconde sections de fixation d'extrémité (32, 34), les moyens de connexion intermédiaires plans et élastiques (36) présentant une faible résistance à un mouvement relatif entre les portions de fixation d'extrémité (32, 34) dans une direction radiale et une forte résistance à un tel mouvement relatif dans les directions axiale et circonférentielle;

   au moins les secondes portions de fixation d'extrémité (34) et les sections de pont (38) étant constituées en une substance présentant un coefficient de dilatation thermique approximativement égal à celui du transducteur,

   caractérisé en ce que

   les premières et secondes portions de fixation d'extrémité (32, 34) sont positionnées au voisinage les unes des autres mais séparées par des interstices dans le même plan de fixation qui est généralement perpendiculaire à l'axe de la section de fixation de transducteur, et les moyens de connexion intermédiaires (36) s'étendent sur un côté du plan de fixation.

2. Système de fixation selon la revendication 1, dans lequel les moyens d'interconnexion plans et élastiques (36) comprennent une paire de portions d'interconnexion planes et élastiques (36) qui sont reliées les unes aux autres et aux portions d'interconnexion (36) d'éléments de fixation adjacents (30) par les sections de pont (38).

3. Système de fixation selon l'une quelconque des revendications précédentes, dans lequel chacune des premières portions d'extrémité (32) se termine par un patin de fixation (40) faisant saillie vers l'extérieur et relié au boîtier de support (12) et chacune des secondes portions d'extrémité (34) se termine par un patin de fixation (40) faisant saillie vers l'intérieur et relié à la section de fixation (27) du transducteur (14).

4. Système de fixation selon l'une quelconque des revendications précédentes, dans lequel l'ensemble de la bague de fixation (16) est formé en une substance présentant un coefficient de dilatation thermique approximativement égal à celui du transducteur.

5. Système de fixation selon l'une quelconque des revendications précédentes, dans lequel les sections de pont (38) séparent des éléments de fixation adjacents (30) selon des espacements angulaires égaux aux interstices entre les premières et secondes extrémités (32, 34) d'éléments de fixation individuels (30).

6. Système de fixation selon l'une quelconque des revendications précédentes, dans lequel le transducteur est un accéléromètre comprenant un axe de détection de force; et le plan de chaque portion intermédiaire est généralement parallèle à cet axe de détection de force.

Fig. 1.

Fig. 2.

Fig. 4.

Fig. 3.

*Fig.5.*